# EUROPÄISCHE PATENTSCHRIFT

(11) **EP 2 649 222 B1**
(45) Veröffentlichungstag und Bekanntmachung des Hinweises auf die Patenterteilung: **24.10.2018**
(21) Anmeldenummer: 11793750.8
(22) Anmeldetag: 05.12.2011
(51) Int. Cl.: C25B 11/03, H01M 8/02

(54) **VERFAHREN ZUM EINBAU VON SAUERSTOFFVERZEHRELEKTRODEN IN ELEKTROCHEMISCHE ZELLEN UND ELEKTROCHEMISCHE ZELLE**
METHOD FOR MOUNTING OXYGEN CONSUMING-ELECTRODES IN ELECTROCHEMICAL CELLS AND ELECTROCHEMICAL CELLS
PROCÉDÉ DE MONTAGE D'ÉLECTRODES CONSOMMANT DE L'OXYGÈNE DANS DES CELLULES ÉLECTROCHIMIQUES ET CELLULE ÉLECTROCHIMIQUE

(30) Priorität: 10.12.2010 DE 102010054159
(43) Veröffentlichungstag der Anmeldung: 16.10.2013
(73) Patentinhaber: Covestro Deutschland AG, 51373 Leverkusen (DE); ThyssenKrupp Uhde Chlorine Engineers GmbH, 44141 Dortmund (DE)
(72) Erfinder: BULAN, Andreas, 40764 Langenfeld (DE); GROSSHOLZ, Michael, 51375 Leverkusen (DE); KIEFER, Randolf, 45772 Marl (DE); WOLTERING, Peter, 48485 Neuenkirchen (DE)
(74) Vertreter: Levpat
(86) Internationale Anmeldenummer: PCT/EP2011/071759
(87) Internationale Veröffentlichungsnummer: WO 2012/076472

(56) Entgegenhaltungen:
- WO-A1-02/38833
- WO-A1-03/023090
- JP-A- 2000 273 677
- US-A1- 2005 173 257
- US-B1- 6 423 194

## Beschreibung

Die Erfindung betrifft ein Verfahren zum Einbau einer Sauerstoffverzehrelektrode in eine Elektrolysevorrichtung und eine Elektrolysevorrichtung, insbesondere für den Einsatz in der Chloralkali-Elektrolyse, bei der hinsichtlich ihrer Gasdichtigkeit kritische Bereiche besonders abgedeckt sind.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas- und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Weiterhin sollte die SVE einfach in die Elektrolysevorrichtung eingebaut und ausgetauscht werden können. Zum Einbau sind verschiedene Verfahren beschrieben.

In der US 7.404.878 wird beschrieben, dass z.B. die Stosskanten zweier SVEs mit einer Schicht enthaltend Perfluorcarbonsäure, Perfluorsulfonylfluorid oder einen Perfluorcarbonsäurealkylester verbunden werden. Die Schicht muss anschließend mit den SVEs durch eine Hitzebehandlung verbunden werden. Die Methode ist schwierig anzuwenden, da bei der Hitzebehandlung die SVE beschädigt werden kann. Weiterhin besteht der Nachteil, dass in den entstehenden abgedeckten und elektrochemisch nicht aktiven Rand- und Überlappungsbereichen die SVE nicht arbeitet und dadurch die restliche Fläche mit einer höheren Stromdichte betrieben wird, was zu einer Spannungserhöhung und damit zu einem insgesamt höheren Energieverbrauch führt.

In der DE 4444114 A1 wird der Einbau einer SVE durch Kontaktierung an die Grundstruktur eines elektrochemischen Reaktionsapparates mittels Ausbildung eines Klemmkontaktes beschrieben. Bei Verwendung von Klemm- oder Presskontakten stellte sich jedoch heraus, dass sich ihr elektrischer Übergangswiderstand im Verlauf des Betriebes der Anordnung häufig verschlechtert - hieraus ergibt sich ein unerwünschter Anstieg des Verbrauches elektrischer Energie. Weiterhin nachteilig ist, dass die Bereiche der Klemmleisten elektrochemisch inaktiv sind und somit SVE Fläche verringert wird.

Eine elektrisch dauerhaftere Verbindung zwischen Elektroden und elektrochemischem Reaktionsapparat ist mit Hilfe von Schweißprozessen zu erzielen, wie in der. EP 1041176 A1 beschrieben. Bei Verwendung einer Gasdiffusionselektrode mit einem nicht perforierten, umlaufenden, metallischen Rand kann eine direkte Verschweißung mit der Grundstruktur der Elektrode vorgenommen werden. Der in der EP 1041176 A1 erwähnte, durchgängige Rand der Elektrodengrundstruktur bedingt jedoch als Trägerstruktur ein Loch- oder Schlitzblech. Oftmals bestehen daher die zu integrierenden Elektroden aus einer metallisch leitenden, über den gesamten Bereich offenporigen Grundstruktur, in deren Hohlräume die elektrochemisch aktive Masse, im Folgenden Beschichtung genannt, eingebettet ist. Versuche die beschichtete Elektrode direkt zu verschweißen, scheiterten an der meist statt findenden Zersetzung der Beschichtungsmasse bei hohen Fügetemperaturen. Um eine qualitativ einwandfreie Verbindung zu erreichen, ist in der Schweißzone eine Abwesenheit von Beschichtungsmasse notwendig: die offenporige Grundstruktur der Elektrode ist daher in diesem Bereich frei von Beschichtungsmasse und würde bei Betrieb in dem elektrochemischen Reaktionsapparat ohne Maßnahmen zur Erzielung einer Dichtwirkung eine Vermischung der auf beiden Seiten der Elektrode befindlichen Medien, Elektrolyt und Gas, ermöglichen.

Um die Vermischung der Medien zu vermeiden, wird die unbeschichtete Schweißzone zum Zeitpunkt der Applikation mit flüssigen oder pastösen und sich nach einiger Zeit verfestigenden Materialien, welche die offenporige Struktur an dieser Stelle abdichten, versehen. Eine Verfestigung der Dichtmaterialien kann beispielsweise durch chemisches Aushärten einer flüssig oder pastenartig aufgebrachten Substanz erfolgen. Aufgrund der in dem elektrochemischen Reaktionsapparat vorhandenen, chemisch meist sehr aggressiven Bedingungen hat sich die Standzeit der derart erzeugten Abdichtungen als sehr kurz erwiesen - sie bewegte sich im Bereich von Wochen bzw. wenigen Monaten und steht somit einem effizienten Dauereinsatz des elektrochemischen Reaktionsapparates entgegen.

Weiterhin ist die Verwendung einer durch Erhitzen plastisch gewordenen Masse, welche bei Abkühlung wieder erstarrt, als Dichtmaterial in der Literatur, s. EP 1029946 A2, beschrieben worden. Hierbei können zwar chemisch inerte Substanzen, wie PTFE, verwendet werden. Zur dauerhaften Verbindung dieser Substanz mit der Grundstruktur muss jedoch eine hohe Temperatur aufgewandt werden - die Durchführung der Prozesse nach der Lehre des zitierten Patentes erfordert demzufolge umfangreiche Vorrichtungen / Maschinen.

Die DE 10152792 A1 beschreibt eine Methode zur Herstellung einer Verbindung zwischen einer Gasdiffusionselektrode und Grundstruktur eines elektrochemischen Reaktionsapparates, bei der eine Trennung der auf Vorder- und Rückseite der Elektrode befindlichen Medien gewährleistet werden kann, indem eine elektrisch niederohmige Verbindung hergestellt wird zwischen dem Rand der Elektrode und einer metallischen falzartigen, den Rand aufnehmenden Ausbildung eines umlaufenden Rahmens und der elektrisch niederohmigen Anbindung des umlaufenden Rahmens an die Grundstruktur des elektrochemischen Reaktionsapparates. Das Verfahren gemäß der DE 10152792 A1 ist dadurch gekennzeichnet, dass der gefalzte Teil des Rahmens aus Profilen gefertigt wird, die in den Eckbereichen auf Stoß- oder Gehrung geschnitten sind und mittels Laser-, und anderer Schweißverfahren oder Lötverfahren miteinander verbunden sind. Nachteil des Verfahrens ist insgesamt, dass die Einbaumaßnahme sehr aufwändig und kostenintensiv ist. Ein Wechsel der SVEs stellt sich ebenfalls sehr aufwändig dar und kann nicht ohne entsprechende Werkstatt und Werkzeug durchgeführt werden. Ebenfalls nachteilig auf die Performance wirkt sich aus, dass die gefalzten Bereiche / Profile elektrochemisch inaktiv sind und somit aktive SVE Fläche verloren geht. Folge hiervon ist, dass die SVE bei einer höheren Stromdichte betrieben wird als die Gegenelektrode (Anode), was zu einer Erhöhung der Elektrolysespannung und zu einer Verschlechterung der Wirtschaftlichkeit führt.

EP 1029946 A2 beschreibt eine Gasdiffusionselektrode, bestehend aus einer reaktiven Schicht und einer Gasdiffusionsschicht und einer Kollektorplatte, z.B. einem Silbernetz. Die Beschichtung bedeckt die Kollektorplatte nicht vollständig, sondern lässt einen beschichtungsfreien Rand überstehen. Eine dünne, rahmenförmige Metallplatte, vorzugsweise aus Silber, wird so auf die Gasdiffusionselektrode aufgebracht, dass der metallische Rahmen eine möglichst geringe Fläche der elektrochemisch aktiven Beschichtung bedeckt und hierüber eine Dichtwirkung erzielt wird. Der über die SVE überstehende Rahmen dient dazu, die SVE mit dem Elektrolysevorrichtung beispielsweise mittels Schweißen zu verbinden. Diese Kontaktierung ist kompliziert und deckt einen Teil der SVE-Fläche ab, wodurch die lokale Stromdichte der freien SVE-Fläche steigt und die Performance des Elektrolyseurs aufgrund höherer Elektroysespannung sinkt. Außerdem bedeutet der komplizierte Einbau hohe Fertigungskosten des Elektrolyseurs bzw. hohe Kosten für den Wechsel der SVE.

Die DE 10330232 A1 beschreibt den Einbau einer SVE bei der in einem Arbeitsgang die Herstellung eines elektrischen Kontaktes zwischen SVE und Elektrolysevorrichtung sowie eine Abdichtung zwischen Gas- und Elektrolytraum erfolgt. Hierbei wird ein metallischer Streifen sowohl auf den beschichtungsfreien Rand der SVE als auch auf den mit katalysatorhaltigen Bereich der SVE aufgelegt und mittels Laserschweißtechnik mit der Haltestruktur der Elektrolysevorrichtung verbunden. Dieses Verfahren hat den Nachteil, dass die Bereiche des metallischen Streifens als auch der Schweißverbindung elektrochemisch inaktiv sind und dass das gewählte Verfahren sehr aufwändig ist.

Da SVEs nicht in Abmessungen zur Verfügung stehen, bei der nur eine SVE je Elektrolyseurvorrichtung eingebaut werden muss, müssen mehrere SVE je Elektrolysevorrichtung eingebaut werden. Der Einbau kann dabei durch geringe Überlappung der SVEs oder durch Einbau auf Stoß erfolgen. Selbst wenn eine SVE je Elektrolysevorrichtung zur Verfügung stehen würde, könnten Bereiche vorhanden sein, an denen einbaubedingt die SVE geknickt würde.

Besondere Methoden zum Abdichten eventueller herstellungs- oder gebrauchsbedingter Risse oder Durchbrüche in SVEs sind aus dem Stand der Technik nicht weiter bekannt.

Aufgabe der Erfindung ist es daher, eine neue Methode zur Abdichtung der Stoßkanten oder der Überlappungsbereiche oder der einbaubedingten Knick-Bereiche an SVEs, sowie Verfahren zum Abdichten eventueller herstellungs- oder gebrauchsbedingter Risse oder Durchbrüche in SVEs zur Verfügung zu stellen. Je nach dem konstruktiven Aufbau einer Elektrolysevorrichtung muss die SVE teilweise um Ecken geführt werden, wodurch eine starke mechanische Beanspruchung auf die SVE wirkt und hierdurch Undichtigkeiten auftreten können. Undichtigkeiten führen wie oben beschrieben dazu, dass Elektrolyt aus dem Elektrolytraum in den Gasraum oder Gas aus dem Gasraum in den Elektrolytraum eindringen kann.

Weiterhin sollte der Einbau der SVEs in Elektrolysevorrichtungen, bei denen ein Gas- von einem Elektrolytraum getrennt wird, so gestaltet sein, dass weder Gas aus dem Gasraum in den Elektrolytraum noch Elektrolyt aus dem Elektrolytraum in den Gasraum eintreten kann. Die SVE sollte bei einer Druckdifferenz zwischen dem Gas- und dem Flüssigkeitsraum von 1-170 mbar dicht sein. Hierbei ist mit dicht gemeint, dass kein sichtbares Austreten von Gasblasen in den Elektrolytraum beobachtbar ist. Mit flüssigkeitsdicht ist gemeint, dass eine Flüssigkeitsmenge von nicht mehr als 10 g /(h*cm²) durch die SVE tritt (wobei g für die Masse an Flüssigkeit, h für eine Stunde und cm² für die geometrische Elektrodenoberfläche steht). Tritt jedoch zuviel Flüssigkeit durch die SVE so kann diese nur an der der Gasseite zugewandten Seite nach unten abfließen. Dabei kann sich ein Flüssigkeitsfilm ausbilden, der den Gaszutritt zur SVE behindert und dadurch die Leistungsfähigkeit der SVE extrem negativ beeinflusst (Sauerstoff-Unterversorgung). Tritt zuviel Gas in den Elektrolytraum ein, so müssen die Gasblasen aus dem Elektrolytraum herausgeführt werden können. In jedem Fall blenden die Gasblasen Elektroden und Membranfläche ab, was zu einer Stromdichteverschiebung und damit im galvanostatischen Betrieb der Zelle zu einer lokalen Stromdichteerhöhung und über die Zelle zu einer unerwünschten Zellspannungserhöhung führt.

Weiterhin soll durch den Einbau nur eine möglichst geringe elektrochemisch aktive Fläche der Gasdiffusionselektrode verloren gehen und der Einbau technisch einfach durchführbar sein.

Die Aufgabenstellung konnte beispielsweise dadurch gelöst werden, dass die Überlappungsbereiche / Knick- oder Stoßkanten einer SVE beim Einbau mit einer Folie bestehend aus einer polymeren Komponente und Silberoxid abgedeckt wird.

Gegenstand der Erfindung ist ein Verfahren gemäß Anspruch 1 zum gasdichten Einbau von einer oder von mehreren angrenzenden Sauerstoffverzehrelektroden in eine elektrochemische Halbzelle, dadurch gekennzeichnet, dass beim Anbringen der Sauerstoffverzehrelektroden am Rahmen des Gaskompartiments der Halbzelle auftretende Knickbereiche, und/oder Rissbereiche der Sauerstoffverzehrelektroden, und/oder Stosskantenbereiche und/oder Überlappungsbereiche benachbarter Sauerstoffverzehrelektroden mit einer zusätzlichen Folie - nachstehend auch Dichtfolie genannt - abgedeckt werden, die eine der Sauerstoffverzehrelektroden gleiche Zusammensetzung aufweist, und dünner als die Schichtdicke der Sauerstoffverzehrelektrode ist.

Das neue Verfahren wird angewendet auf Gasdiffusionselektroden, die als katalytisch aktive Komponente Silber und/oder Silberoxid enthalten. Die Erfindung bezieht sich bevorzugt auf den Einbau von Gasdiffusionselektroden in eine Elektrolysevorrichtung, bei der ein Gasraum von einem Elektrolytraum abgetrennt wird. Es werden dabei SVE auf Silberbasis eingesetzt, deren Herstellung beispielhaft in den Schriften DE 3710168 A1 oder EP 115 845 A1 beschrieben sind. Ebenfalls könnten SVE basierend auf Katalysatoren, bei denen Silber auf Kohlenstoff geträgert ist, eingesetzt werden.

Im Verfahren weist die Dichtfolie das gleiche katalytisch aktive Material wie die Sauerstoffverzehrelektrode auf.

Die Dichtfolie und/oder die Sauerstoffverzehrelektroden basieren auf einem fluorierten oder teilfluorierten Polymeren, insbesondere Polytetrafluorethylen (PTFE), und einem Silber enthaltenden katalytisch aktiven Material.

In einer weiteren bevorzugten Ausführung des neuen Verfahrens umfasst die katalytisch aktive Komponente in der Dichtfolie und in den Sauerstoffverzehrelektroden Silber, Silber-I-Oxid oder Silber-II-Oxid, oder Gemische von Silber- und Silberoxid.

Ein weiteres besonders bevorzugtes Verfahren ist dadurch gekennzeichnet, dass die Dichtfolie und die Sauerstoffverzehrelektroden Mischungen aufweist, die als katalytisch aktive Komponente 70 bis 95 Gew.-% Silberoxid, 0 - 15 Gew.-% Silber-Metall-Pulver und 3 - 15 Gew.-% eines fluorierten Polymeren, insbesondere PTFE, enthalten.

Vorzugsweise werden die Dichtfolie und die Sauerstoffverzehrelektroden nach dem Aufbringen der Dichtfolie miteinander verpresst.

In einer Variante des neuen Verfahrens verbinden sich die Dichtfolie und die Sauerstoffverzehrelektroden nach dem Aufbringen der Dichtfolie bei Inbetriebnahme der Zelle an ihren Kontaktstellen miteinander. Besonders bevorzugt für die Ausführung des neuen Verfahren ist, wenn die Überlappungs- oder/und Stoßbereiche und/oder Knickbereiche sich an Stellen in der Elektrolysevorrichtung befinden, an denen die Elektrolysevorrichtung nach dem Zusammenbau eine mechanische Kraft auf die beschriebene Dichtfolie ausübt.

Beschreibung bevorzugter Formen der für das neue Verfahren geeigneten Dichtfolie:
Zur Herstellung der Dichtfolie wird Silberoxid mit einer Korngrößenverteilung von D50-Wert von 1-30 µm eingesetzt, es lassen sich jedoch auch gröbere oder feinere Pulver einsetzen. Das eingesetzte Polymer sollte unter den Einsatzbedingungen der SVE chemisch beständig sein. Beispielsweise sollte bei der Chlor-Alkali-Elektrolyse das Polymer gegen 32 Gew.-%ige NaOH bei 90°C und reinem Sauerstoff beständig sein. Eingesetzt werden können z.B. fluorierte oder teilfluorierte Polymere wie z.B. Polytetrafluorethlyen (PTFE). Weiterhin sollte dass Polymer ebenso gegen die oxidierende Wirkung des Silberoxid weitgehend stabil sein, insbesondere bei den Fertigungsbedingungen.

Zur Herstellung der bevorzugt einzusetzenden Dichtfolie wird soviel von der Polymerkomponente eingesetzt, dass noch eine handhabbare, mechanisch belastbare Folie herstellbar ist. Unter mechanisch belastbar ist zu verstehen, dass die Dichtfolie ohne Zerstörung, d.h. kein Knicke oder Brüche bei denen die Dichtfolie größere Löcher oder breite Risse bildet, in eine technische Elektrolysevorrichtung eingebaut werden kann.

Zur Erhöhung der mechanischen Belastbarkeit wird in die Dichtfolie ein Verstärkungsgewebe eingebaut. Das Verstärkungsgewebe sollte gegen die oxidierende Wirkung von Silberoxid halbwegs stabil sein, d.h. es sollte ohne nennenswerte Korrosion oder Verlust der mechanischen Eigenschaften den Fertigungsprozess bis zur fertigen Dichtfolie überstehen. Eine chemische Beständigkeit des Verstärkungsgewebes unter den Einsatzbedingungen ist nicht zwingend erforderlich. Es könnten daher auch Werkstoffe eingesetzt werden die z.B. gegen Natronlauge unbeständig sind, wie z.B. Polyester. Eingesetzt werden können beispielsweise elektrisch leitfähige Träger wie Netz, Gewebe, Geflecht, Gewirke, Vlies oder Schaum aus Metall, insbesondere aus Nickel, Silber oder Mischungen aus Nickel und Silber oder auch Nickel-Kupferlegierungen. Ebenso könne auch nichtmetallische beständige Werkstoffe z.B. auf Basis von Polypropylen für das Verstärkungsgewebe eingesetzt werden.

Der Anteil der polymeren Komponente in der Mischung mit Silberoxid für die Dichtfolie ist bevorzugt so zu wählen, dass eine elektrochemische Reduktion des Silberoxids in der Dichtfolie noch unter den Bedingungen des Betriebes der SVE in der Elektrolysevorrichtung erfolgen kann. Gemäß einem bevorzugten Verfahren beträgt daher der Silberoxid-Anteil mehr als 50 Gew.%, besonders bevorzugt mehr als 80 Gew.%. Als Polymer für die Dichtfolie wird besonders bevorzugt Polytetrafluorethylen (PTFE) eingesetzt.

Aus der polymeren Komponente und dem Silberoxid kann ähnlich den aus dem Stand der Technik grundsätzlich bekannten Verfahren zur SVE-Herstellung eine Dichtfolie hergestellt werden. Dies kann z.B. durch die folgenden verschiedenen Verfahren erfolgen:
Eine Möglichkeit ist, das Silberoxid und die polymere Komponente in Pulverform zu einer Folie zu extrudieren.

Ebenfalls kann das Silberoxid wie ein Füllstoff in die polymere Komponente, im Falle von PTFE ähnlich der SVE-Herstellung, die in der EP 951500 A1 beschrieben ist, durch Pastenextrusion eingearbeitet werden und somit eine poröse Dichtfolie erzeugt werden.

Ebenfalls kann das Silberoxid auf eine poröse PTFE-Folie z.B. aufgestreut werden und anschließen eingepresst werden.

Weiterhin kann das Polymer analog dem in der DE 2941774 A1 beschriebenen Mischprozess verarbeitet und anschließend zu einer Folie mit Verstärkungsgewebe kalandriert oder verpresst werden.

Gemäß einem aus der der EP 115845 A2 bekannten Verfahren zur SVE-Herstellung kann bevorzugt ein Silberkatalysator auf PTFE gefällt werden. Hierbei wird bei der Fällung von Silbernitrat mit Natronlauge ein Reduktionsmittel zugegeben, dass das entstehende Silberoxid direkt zu Silber reduziert. Wird das Reduktionsmittel weggelassen, kann Silberoxid auf PTFE gefällt werden. Dieses Material kann abfiltriert, getrocknet und mit einem Mischprozess gemäß der DE 2941774 A1 zu einem Pulver verarbeitet werden, dass gemäß der DE 3710168 A1 oder EP 115 845 A2 zu einer Folie verpresst werden kann.

Der spezielle Inhalt der in den vorgenannten Veröffentlichungen beschriebenen Herstellungsverfahren wird vollinhaltlich mit zum Offenbarungsgehalt dieser Anmeldung aufgenommen.

Die Dichtfolie besteht besonders bevorzugt aus Silberoxid zu 60 bis 99 Gew.-% und aus PTFE zu 1 bis 40 Gew.-%. Optional kann auch ein Silberpulver zusätzlich zugegeben werden. Dieses sollte insbesondere einen mittleren Korndurchmesser von weniger als 50µm aufweisen. Die Menge an zusätzlichem Silberpulver beträgt besonders bevorzugt 0 bis 15 Gew.-%.

Die Dicke der im neuen Verfahren bevorzugt einzusetzenden Dichtfolie beträgt von 10µm bis 800µm, bevorzugt von 50µm bis 600µm. Besonders bevorzugt wird die Dichtfolie besonders dünn gefertigt, d.h. mit einer Dicke von weniger als 500µm.

Die Schichtdicke der Sauerstoffverzehrelektrode beträgt ohne Dichtfolie typischerweise von 0,1 bis 0,9 mm, bevorzugt von 0,2 bis 0,7 mm.

Weiterer Gegenstand der Erfindung ist eine elektrochemische Zelle gemäß Anspruch 9, mit einer oder mit mehreren, zueinander angrenzenden Sauerstoffverzehrelektroden (1, 1a), dadurch gekennzeichnet, dass die Sauerstoffverzehrelektroden beim Einbau am Rahmen des Gaskompartiments der Zelle auftretende Knickbereiche, und/oder Rissbereiche der Sauerstoffverzehrelektroden und/oder Stosskantenbereiche und/oder Überlappungsbereiche benachbarter Sauerstoffverzehrelektroden aufweisen, die mit einer zusätzlichen Folie abgedeckt sind, die eine der Sauerstoffverzehrelektroden gleiche Zusammensetzung aufweist, und dünner ist als die Schichtdicke der Sauerstoffverzehrelektrode.

Die elektrochemische Zelle ist dadurch gekennzeichnet, dass sie in der Gasdiffusionsschicht der Sauerstoffverzehrelektroden fluorierte Polymere, insbesondere Polytetrafluorethylen (PTFE), enthält.

Die elektrochemische Zelle weist als zusätzliches Trägerelement in den Sauerstoffverzehrelektroden und in der Folie ein elektrisch leitendes flexibles textiles Gebilde, insbesondere aus Metallfäden, bevorzugt aus Nickel oder aus mit Silber beschichtetem Nickel auf. Das Verstärkungsgewebe besteht bevorzugt aus einem Metall-Gewebe, z.B. einem Nickel-Netz, Silber-Netz oder einem versilberten Nickel-Netz, bei dem die Maschenweiten mehr als 0,1mm und die Drahtdicke mehr als 60µm beträgt. Ebenfalls können andere Werkstoffe eingesetzt werden.

Die Dichtfolie sollte eine rechnerische Porosität von 20 - 70% aufweisen. Die rechnerische Porosität ergibt sich aus dem Verhältnis der Dichte der eingesetzten Materialien und der vorhandenen Menge in der hergestellten Dichtfolie sowie der Dichte der erzeugten Dichtfolie (ohne das Verstärkungsgewebe).

Das Verdichtungsverhältnis beträgt zwischen 2 und 5, wobei hier das Verhältnis aus Foliendichte (ohne Verstärkungsgewebe) zur Pulverschüttdichte zugrunde gelegt wird.

Weiter bevorzugt sind Varianten der elektrochemischen Zelle, die mit einem Einbau von Sauerstoffverzehrelektroden gemäß einem der oben beschriebenen neuen Verfahren erhalten sind.

Die Erfindung wird nachfolgend anhand der Figuren durch die Beispiele, welche jedoch keine Beschränkung der Erfindung darstellen, näher erläutert.

Es zeigen:
- Fig. 1: einen schematischen Querschnitt durch eine elektrochemische Halbzelle 2
- Fig. 2: einen schematischen Querschnitt durch eine Laborzelle 2, 10 im halb geöffneten Zustand - Darstellung des Stoßbereichs 7
- Fig. 2a: eine schematische Darstellung der Überlappung einer Dichtfolie 9 mit zwei Sauerstoffverzehrelektroden 1 und 1a im Bereich 7, an dem die Sauerstoffverzehrelektroden 1 und 1a aneinanderstoßen, sowie die Überlappung einer Dichtfolie 9 mit einem Riss 6 in der Sauerstoffverzehrelektrode 1a
- Fig.3: einen schematischen Querschnitt durch eine Laborzelle 2, 10 - Darstellung des Überlappungsbereichs
- Fig. 3a: eine schematische Darstellung der Überlappung einer Dichtfolie 9 mit zwei Sauerstoffverzehrelektroden 1 und la im Bereich 8, in dem die Sauerstoffverzehrelektroden 1 und 1a sich überlappen

In den Figuren haben die Bezugszeichen die jeweils rechts stehende Bedeutung:
- 1, 1a: Sauerstoffverzehrelektroden
- 2: Elektrochemische Halbzelle (2)
- 3: Rahmen (3)
- 4: Gaskompartiment (4)
- 5: Knickbereich (5)
- 6: Rissbereich (6)
- 7: Stosskantenbereich (7)
- 8: Überlappungsbereich (8)
- 9: Dichtfolie (9)
- 10: Anodenhalbzelle mit Anode
- 11: Ionenaustauschermembran
- 12: Spacer
- 13: Stützstruktur
- 14: Dichtprofil
- 15: Anode

### Beispiele

### Herstellung der Folie:

2 kg einer Mischung aus 88 Gew.-% Silberoxid, 5 Gew.-% PTFE und 7 Gew.-% Silberpulver wurden in einem Mischer der Fa. Eirich RO2 für 5min intensiv gemischt, danach wurde die Mischung auf Raumtemperatur abkühlen gelassen und danach erneut für 3 min intensiv gemischt. Nach Abkühlung auf Raumtemperatur wurde die Mischung auf eine Verstärkungsgewebe bestehend aus einem Nickel-Gewebe (Drahtdicke 0,14mm, Maschenweite 0,5mm) so aufgestreut, dass eine über das Verstärkungsgewebe entstehende 1mm dicke Pulverschicht entstand. Diese Pulverschicht wurde mit dem Verstärkungsgewebe mittels eines Kalanders verdichtet. Das Verdichtungsverhältnis betrug 3,4. Die Dicke der entstandenen Folie 9 betrug 290µm, die gerechnete Porosität 44%.

Die so erhaltene Folie 9 kann endlos gefertigt werden. Ihre Breite ist limitiert durch die Breite der Walzen des Kalanders. Die Folie 9 kann anwendungstechnisch auf die entsprechenden Dicht-/Knick- und oder Überlappungsbereiche zurecht geschnitten werden.

### Wirksamkeitstest:

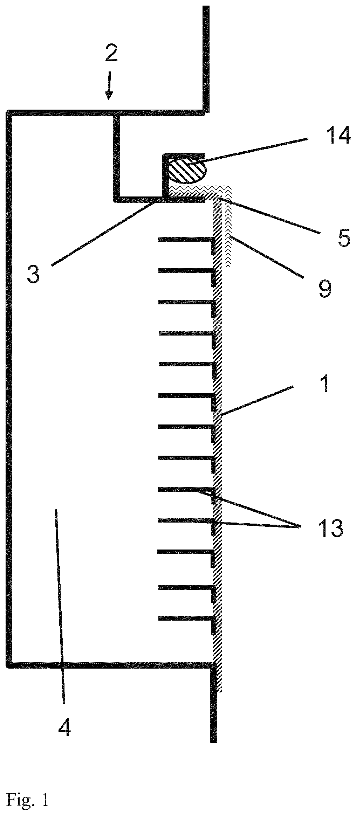

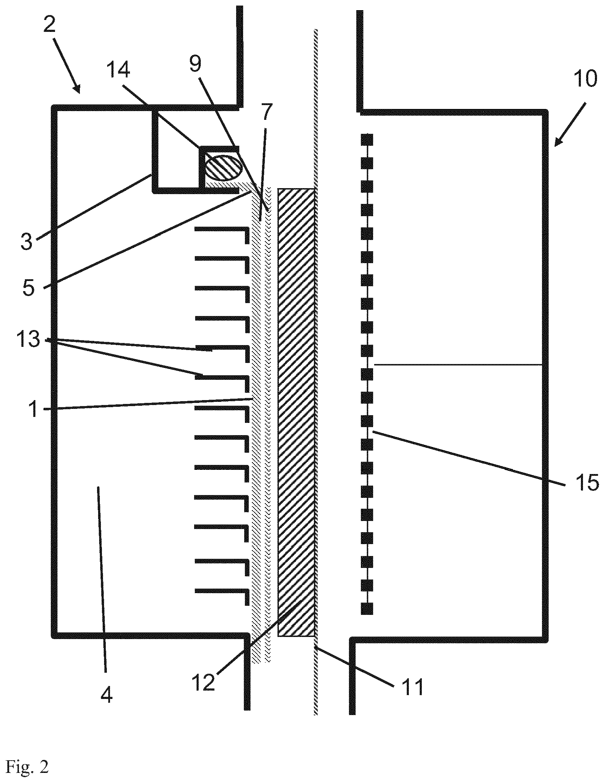

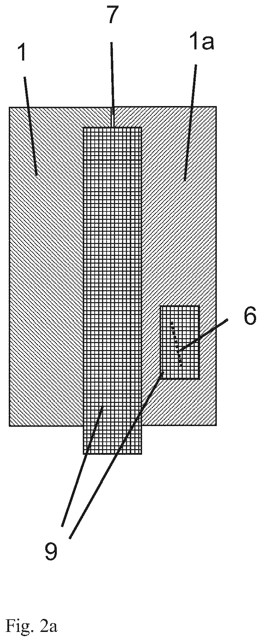

Die Dichtwirkung der Folie 9 wurde in einer Elektrolyseelle erprobt. In der Kathodenhalbzelle 2 erfolgt die Stromzuführung zur Kathode 1, 1a über eine Stützstruktur 13 (siehe Fig. 1 und 2). Hierzu wurden zwei Silberoxid-basierte Sauerstoffverzehrkathoden 1 und 1a (SVE) auf Stoß zusammengeführt und mit einem Dichtprofil 14 in einer Profilkante des Rahmens 3 fixiert (siehe Fig. 2). Über die Stoßkante 7 wurde die oben beschriebene silberoxidbasierte Folie 9 so gelegt und gepresst, dass die Folie 9 auf jeder Seite der Stoßkante 7 jeweils ca. 3mm überlappte. Figur 2a verdeutlicht in einer schematischen Seitenansicht zu Fig. 2 die Lage der Folie 9 und der SVEs 1 und la im Stoßkantenbereich 7. Die Anodenhalbzelle 10 wies eine Anode 15 aus einem Titanstreckmetall beschichtet mit einem handelsüblichen edelmetalloxidbasierten DSA®-Coating der Fa. Denora auf. Zu- und Ablauf der Elektrolyten sowie der Gase sind in den Figuren nicht gezeichnet, da sie außerhalb der Schnittebene liegen. Da die Elektrolysezelle als Fallfilmzelle betrieben wurde, ist der Katholytzulauf im oberen Teil der Halbzelle angebracht und der Ablauf befindet sich am unteren Ende des Distanzstücks 12. Die Elektrolysezelle wurde anschließend zusammengebaut und in Betrieb genommen. Der Laugedruck an der Unterkante der SVEs betrug 20mbar. Der Gasdruck (Sauerstoff) im Gasraum 4 betrug 60mbar. Als Anolyt diente eine Natriumchlorid-Lösung mit einem Natriumchlorid-Gehalt von 210g/l und als Katholyt eine 30Gew.%ige Natronlauge. Die Temperatur der Elektrolyte betrug ca. 85°C, die Stromdichte 4kA/m². Eine Erhöhung der Zellspannung konnte nicht beobachtet werden.

Auf der Stoßkante 7 verlief das Disstanzstück 12, das den Abstand zwischen Membran 11 und silberbasierter SVE 1; 1a konstant auf 3mm hält. Nach Inbetriebnahme konnte kein Gas- oder Flüssigkeitsdurchbruch festgestellt werden. Die Zellspannung der Laborzelle war unverändert im Verhältnis zu einer Zelle mit durchgehender Sauerstoffverzehrkathode ohne Stoßkante 7.

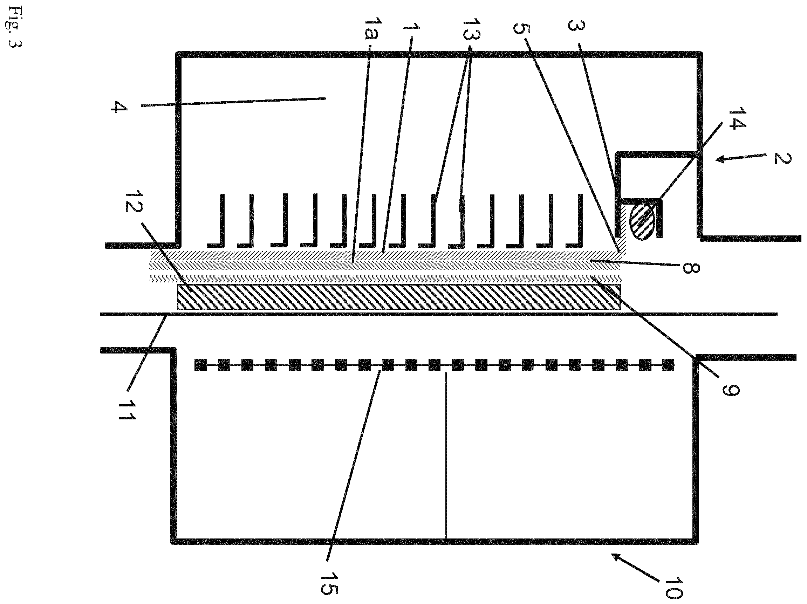

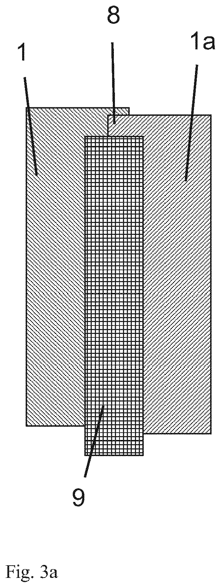

Mit Hilfe der Folie 9 ist es auch möglich ähnlich der zuvor beschriebenen Weise am Rahmen 3 des Gaskompartiments 4 der Halbzelle 2 auftretende Knickbereiche 5 der Sauerstoffverzehrelektroden 1, 1a, (siehe Fig. 1) oder Überlappungsbereiche 8 benachbarter Sauerstoffverzehrelektroden 1 und 1a (siehe Fig. 3 und 3a) oder auch Risse der Sauerstoffverzehrelektroden 1a im Rissbereich 6 abzudichten (siehe Fig. 2a).

## Patentansprüche

1. Verfahren zum gas- und flüssigkeitsdichten Einbau von einer oder von mehreren angrenzenden Sauerstoffverzehrelektroden (1, 1a) in eine elektrochemische Halbzelle (2), **dadurch gekennzeichnet, dass** beim Anbringen der Sauerstoffverzehrelektroden (1, 1a) am Rahmen (3) des Gaskompartiments (4) der Zelle (2) auftretende Knickbereiche (5), und/oder Rissbereiche (6) der Sauerstoffverzehrelektroden (1, 1a), und/oder Stosskantenbereiche (7) und/oder Überlappungsbereiche (8) benachbarter Sauerstoffverzehrelektroden (1) und (1a) mit einer zusätzlichen Folie (9) abgedeckt werden, die eine der Sauerstoffverzehrelektroden (1, 1a) gleiche Zusammensetzung und das gleiche Silber enthaltende katalytisch aktive Material wie die Sauerstoffverzehrelektrode (1, 1a) aufweist, und dünner als die Schichtdicke der Sauerstoffverzehrelektrode (1, 1a) ist, wobei die Sauerstoffverzehrelektroden (1, 1a) und die Folie (9) auf einem fluorierten Polymeren basieren und dass als zusätzliches Trägerelement in den Sauerstoffverzehrelektroden (1, 1a) und in der Folie (9) ein elektrisch leitendes flexibles textiles Gebilde vorhanden ist.

2. Verfahren nach Anspruch 1, **dadurch gekennzeichnet, dass** die Folie (9) und die Sauerstoffverzehrelektroden (1, 1a) auf Polytetrafluorethylen (PTFE)basieren.

3. Verfahren gemäß einem der Ansprüche 1 bis 2, **dadurch gekennzeichnet, dass** die katalytisch aktive Komponente in der Folie (9) und in den Sauerstoffverzehrelektroden (1, 1 a): Silber, Silber-I-Oxid oder Silber-II-Oxid, oder Gemische von Silber- und Silberoxid umfasst.

4. Verfahren nach einem der Ansprüche 1 bis 3, **dadurch gekennzeichnet, dass** die Folie (9) und die Sauerstoffverzehrelektroden (1, 1a) Mischungen aufweisen, die als katalytisch aktive Komponente 70 bis 95 Gew.-% Silberoxid, 0 - 15 Gew.-% Silber-Metall-Pulver und 3 - 15 Gew.-% eines fluorierten Polymeren, insbesondere PTFE, enthalten.

5. Verfahren nach einem der Ansprüche 1 bis 4, **dadurch gekennzeichnet, dass** die Folie (9) und die Sauerstoffverzehrelektroden (1, 1a) nach dem Aufbringen der Folie (9) miteinander verpresst werden.

6. Verfahren nach einem der Ansprüche 1 bis 5, **dadurch gekennzeichnet, dass** sich die Folie (9) und die Sauerstoffverzehrelektroden (1, 1a) nach dem Aufbringen der Folie (9) bei Inbetriebnahme der Zelle (2) an ihren Kontaktstellen miteinander verbinden.

7. Verfahren nach einem der Ansprüche 1 bis 6, **dadurch gekennzeichnet, dass** die Folie (9) eine Schichtdicke von 10µm bis 800µm, bevorzugt von 50µm bis 600µm aufweist.

8. Verfahren nach einem der Ansprüche 1 bis 7, **dadurch gekennzeichnet, dass** die Sauerstoffverzehrelektroden (1, 1a) eine Schichtdicke von 0,1 bis 0,8 mm, bevorzugt von 0,2 bis 0,7 mm aufweisen.

9. Elektrochemische Zelle (2), insbesondere eine Elektrolysevorrichtung (2'), mit einer oder mit mehreren, zueinander angrenzenden Sauerstoffverzehrelektroden (1, 1a), **dadurch gekennzeichnet, dass** die Sauerstoffverzehrelektroden (1, 1a) beim Einbau am Rahmen (3) des Gaskompartiments (4) der Zelle (2) auftretende Knickbereiche (5) und/oder Rissbereiche (6) der Sauerstoffverzehrelektroden (1, 1a) und/oder Stosskantenbereiche (7) und/oder Überlappungsbereiche (8) benachbarter Sauerstoffverzehrelektroden (1) und (1a) aufweisen, die mit einer zusätzlichen Folie (9) abgedeckt sind, die eine der Sauerstoffverzehrelektroden (1, 1a) gleiche Zusammensetzung und das gleiche Silber enthaltende katalytisch aktive Material wie die Sauerstoffverzehrelektroden (1, 1a) aufweist, und dünner ist als die Schichtdicke der Sauerstoffverzehrelektrode (1, 1a), wobei die Sauerstoffverzehrelektroden (1, 1a) und die Folie (9) auf einem fluorierten Polymeren basieren und dass als zusätzliches Trägerelement in den Sauerstoffverzehrelektroden (1, 1a) und in der Folie (9) ein elektrisch leitendes flexibles textiles Gebilde vorhanden ist.

10. Elektrochemische Zelle (2) nach Anspruch 9, **dadurch gekennzeichnet, dass** sie in der Gasdiffusionsschicht der Sauerstoffverzehrelektroden (1, 1a) und der Folie (9) Polytetrafluorethylen (PTFE) enthält.

11. Elektrochemische Zelle (2) nach Anspruch 9 oder 10, **dadurch gekennzeichnet, dass** sie als zusätzliches Trägerelement in den Sauerstoffverzehrelektroden (1, 1a) und in der Folie (9) ein elektrisch leitendes flexibles textiles Gebilde aus Metallfäden, bevorzugt aus Nickel oder aus mit Silber beschichtetem Nickel aufweist.

12. Elektrochemische Zelle (2) gemäß Anspruch 9 mit einem Einbau von Sauerstoffverzehrelektroden (1, 1a) gemäß einem Verfahren nach einem der Ansprüche 2 bis 8.

13. Verwendung der Elektrochemischen Zelle (2) nach einem der Ansprüche 9 bis 12 in der Chloralkalielektrolyse, insbesondere der NaCI-Elektrolyse.

## Claims

1. Method for the gastight and liquid-tight installation of one or more joining oxygen-consuming electrodes (1, 1a) in an electrochemical half cell (2), **characterized in that** creased regions (5) and/or cracked regions (6) of the oxygen-consuming electrodes (1, 1a) and/or abutting edge regions (7) and/or overlap regions (8) of adjacent oxygen-consuming electrodes (1) and (1a) occurring when the oxygen-consuming electrodes (1, 1a) are brought into juxtaposition with the frame (3) of the gas compartment (4) of the cell (2) are covered with an additional film (9) which has a composition identical to the oxygen-consuming electrodes (1, 1a) and the same silver-containing catalytically active material as the oxygen-consuming electrode (1, 1a), and is thinner than the layer thickness of the oxygen-consuming electrode (1, 1a), wherein the oxygen-consuming electrodes (1, 1a) and the film (9) are based on a fluorinated polymer, and **in that** an electrically conductive flexible textile structure is present as an additional support element in the oxygen-consuming electrodes (1, 1a) and in the film (9).

2. Method according to Claim 1, **characterized in that** the film (9) and the oxygen-consuming electrodes (1, 1a) are based on polytetrafluoroethylene (PTFE).

3. Method according to any of Claims 1 to 2, **characterized in that** the catalytically active component in the film (9) and in the oxygen-consuming electrodes (1, 1a) comprises silver, silver(I) oxide or silver(II) oxide or mixtures of silver and silver oxide.

4. Method according to any of Claims 1 to 3, **characterized in that** the film (9) and the oxygen-consuming electrodes (1, 1a) comprise mixtures which contain, as catalytically active component, from 70 to 95% by weight of silver oxide, 0-15% by weight of silver metal powder and 3-15% by weight of a fluorinated polymer, in particular PTFE.

5. Method according to any of Claims 1 to 4, **characterized in that** the film (9) and the oxygen-consuming electrodes (1, 1a) are pressed together after application of the film (9).

6. Method according to any of Claims 1 to 5, **characterized in that** the film (9) and the oxygen-consuming electrodes (1, 1a) join together at their contact points after application of the film (9) when the cell (2) is started up.

7. Method according to any of Claims 1 to 6, **characterized in that** the film (9) has a layer thickness of from 10 µm to 800 µm, preferably from 50 µm to 600 µm.

8. Method according to any of Claims 1 to 7, **characterized in that** the oxygen-consuming electrodes (1, 1a) have a layer thickness of from 0.1 to 0.8 mm, preferably from 0.2 to 0.7 mm.

9. Electrochemical cell (2), in particular an electrolysis apparatus (2'), having one or more adjoining oxygen-consuming electrodes (1, 1a), **characterized in that** the oxygen-consuming electrodes (1, 1a) have creased regions (5), and/or cracked regions (6) of the oxygen-consuming electrodes (1, 1a) and/or abutting edge regions (7) and/or overlap regions (8) of adjacent oxygen-consuming electrodes (1) and (1a) occurring on installation on the frame (3) of the gas compartment (4) of the cell (2) and these regions are covered with an additional film (9) which has a composition identical to the oxygen-consuming electrodes (1, 1a) and the same silver-containing catalytically active material as the oxygen-consuming electrode (1, 1a), and is thinner than the layer thickness of the oxygen-consuming electrode (1, 1a), wherein the oxygen-consuming electrodes (1, 1a) and the film (9) are based on a fluorinated polymer, and **in that** an electrically conductive flexible textile structure is present as an additional support element in the oxygen-consuming electrodes (1, 1a) and in the film (9).

10. Electrochemical cell (2) according to Claim 9, **characterized in that** it contains polytetrafluoroethylene (PTFE) in the gas diffusion layer of the oxygen-consuming electrodes (1, 1a) and of the film (9).

11. Electrochemical cell (2) according to Claim 9 or 10, **characterized in that** it has an electrically conductive flexible textile structure composed of metal threads, preferably composed of nickel or silver-coated nickel, as additional support element in the oxygen-consuming electrodes (1, 1a) and in the film (9).

12. Electrochemical cell (2) according to Claim 9 with installation of oxygen-consuming electrodes (1, 1a) according to a method according to any of Claims 2 to 8.

13. Use of the electrochemical cell (2) according to any of Claims 9 to 12 in chloralkali electrolysis, in particular the electrolysis of NaCl.

## Revendications

1. Procédé de montage étanche aux gaz et aux liquides d'une ou de plusieurs électrodes à consommation d'oxygène adjacentes (1, 1a) dans une demi-cellule électrochimique (2), **caractérisé en ce que** les zones de coude (5) qui se forment lors de la disposition des électrodes à consommation d'oxygène (1, 1a) sur le châssis (3) du compartiment de gaz (4) de la cellule (2), et/ou les zones de fente (6) des électrodes à consommation d'oxygène (1, 1a), et/ou les zones de bord de butée (7) et/ou les zones de chevauchement (8) d'électrodes à consommation d'oxygène voisines (1) et (1a) sont recouvertes avec un film supplémentaire (9), qui présente une composition identique aux électrodes à consommation d'oxygène (1, 1a) et comprend le même matériau catalytiquement actif contenant de l'argent que les électrodes à consommation d'oxygène (1, 1a), et est plus mince que l'épaisseur de couche des électrodes à consommation d'oxygène (1, 1a), les électrodes à consommation d'oxygène (1, 1a) et le film (9) étant à base d'un polymère fluoré, et **en ce qu'**une structure textile flexible électriquement conductrice est présente en tant qu'élément support supplémentaire dans les électrodes à consommation d'oxygène (1, 1a) et dans le film (9).

2. Procédé selon la revendication 1, **caractérisé en ce que** le film (9) et les électrodes à consommation d'oxygène (1, 1a) sont à base de polytétrafluoroéthylène (PTFE).

3. Procédé selon l'une quelconque des revendications 1 à 2, **caractérisé en ce que** le composant catalytiquement actif dans le film (9) et dans les électrodes à consommation d'oxygène (1, 1a) comprend : de l'argent, un oxyde d'argent I ou un oxyde d'argent II, ou des mélanges d'argent et d'oxyde d'argent.

4. Procédé selon l'une quelconque des revendications 1 à 3, **caractérisé en ce que** le film (9) et les électrodes à consommation d'oxygène (1, 1a) comprennent des mélanges qui contiennent en tant que composant catalytiquement actif 70 à 95 % en poids d'oxyde d'argent, 0 à 15 % en poids de poudre de métal argent et 3 à 15 % en poids d'un polymère fluoré, notamment le PTFE.

5. Procédé selon l'une quelconque des revendications 1 à 4, **caractérisé en ce que** le film (9) et les électrodes à consommation d'oxygène (1, 1a) sont pressés les uns avec les autres après l'application du film (9).

6. Procédé selon l'une quelconque des revendications 1 à 5, **caractérisé en ce que** le film (9) et les électrodes à consommation d'oxygène (1, 1a) sont reliés au niveau de leurs emplacements de contact après l'application du film (9) lors de la mise en service de la cellule (2).

7. Procédé selon l'une quelconque des revendications 1 à 6, **caractérisé en ce que** le film (9) présente une épaisseur de couche de 10 µm à 800 µm, de préférence de 50 µm à 600 µm.

8. Procédé selon l'une quelconque des revendications 1 à 7, **caractérisé en ce que** les électrodes à consommation d'oxygène (1, 1a) présentent une épaisseur de couche de 0,1 à 0,8 mm, de préférence de 0,2 à 0,7 mm.

9. Cellule électrochimique (2), notamment dispositif d'électrolyse (2'), comprenant une ou plusieurs électrodes à consommation d'oxygène (1, 1a) adjacentes les unes des autres, **caractérisée en ce que** les zones de coude (5) qui se forment lors du montage des électrodes à consommation d'oxygène (1, 1a) sur le châssis (3) du compartiment de gaz (4) de la cellule (2), et/ou les zones de fente (6) des électrodes à consommation d'oxygène (1, 1a), et/ou les zones de bord de butée (7) et/ou les zones de chevauchement (8) d'électrodes à consommation d'oxygène voisines (1) et (1a) sont recouvertes avec un film supplémentaire (9), qui présente une composition identique aux électrodes à consommation d'oxygène (1, 1a) et comprend le même matériau catalytiquement actif contenant de l'argent que les électrodes à consommation d'oxygène (1, 1a), et est plus mince que l'épaisseur de couche des électrodes à consommation d'oxygène (1, 1a), les électrodes à consommation d'oxygène (1, 1a) et le film (9) étant à base d'un polymère fluoré, et **en ce qu'**une structure textile flexible électriquement conductrice est présente en tant qu'élément support supplémentaire dans les électrodes à consommation d'oxygène (1, 1a) et dans le film (9).

10. Cellule électrochimique (2) selon la revendication 9, **caractérisée en ce qu'**elle contient du polytétrafluoroéthylène (PTFE) dans la couche de diffusion de gaz des électrodes à consommation d'oxygène (1, 1a) et le film (9).

11. Cellule électrochimique (2) selon la revendication 9 ou 10, **caractérisée en ce qu'**elle contient une structure textile flexible électriquement conductrice en fils métalliques, de préférence en nickel ou en nickel revêtu d'argent, en tant qu'élément support supplémentaire dans les électrodes à consommation d'oxygène (1, 1a) et dans le film (9).

12. Cellule électrochimique (2) selon la revendication 9, comprenant un montage d'électrodes à consommation d'oxygène (1, 1a) par un procédé selon l'une quelconque des revendications 2 à 8.

13. Utilisation de la cellule électrochimique (2) selon l'une quelconque des revendications 9 à 12 dans l'électrolyse chlore-alcali, notamment l'électrolyse NaCl.
